# EUROPÄISCHE PATENTSCHRIFT

(11) **EP 2 100 409 B1**
(45) Veröffentlichungstag und Bekanntmachung des Hinweises auf die Patenterteilung: **24.03.2010**
(21) Anmeldenummer: 07846656.2
(22) Anmeldetag: 19.11.2007
(51) Int. Cl.: H04L 12/28, G06F 15/16, H04L 12/24, H04L 12/26

(54) **VERFAHREN UND VORRICHTUNG ZUM KONFIGURIEREN EINER OAM-EINSTELLUNG**
METHOD AND DEVICE FOR CONFIGURING AN OAM SETTING
PROCÉDÉ ET DISPOSITIF POUR CONFIGURER UN RÉGLAGE OAM

(30) Priorität: 29.11.2006 DE 102006056517
(43) Veröffentlichungstag der Anmeldung: 16.09.2009
(73) Patentinhaber: Nokia Siemens Networks GmbH & Co. KG, 81541 München (DE)
(72) Erfinder: HEILES, Jürgen, 81576 München (DE); SCHNITTER, Matthias, 80689 München (DE)
(74) Vertreter: Fischer, Michael
(86) Internationale Anmeldenummer: PCT/EP2007/009975
(87) Internationale Veröffentlichungsnummer: WO 2008/064793

(56) Entgegenhaltungen:
- US-A1- 2004 033 077
- US-A1- 2004 109 688
- US-B1- 7 043 541

## Beschreibung

Die vorliegende Erfindung betrifft Verfahren und Vorrichtungen zum Konfigurieren einer OAM-Einstellung einer providerseitigen Schnittstelle eines providerseitigen Netzwerkzugangssystems, an welche ein kundenseitiges Netzwerkzugangssystem angeschlossen wird.

In einem Breitbandzugangsnetzwerk, beispielsweise mit Digital Subscriber Line (DSL) oder Passive Optical Network (PON) Technologien für den Teilnehmerzugang, ist der Netzwerkbetreiber an einer Überwachung der Verbindung von einem providerseitigen Netzwerkzugangssystem bis zu einem kundenseitigen Netzwerkzugangssystem interessiert.

Ein providerseitiges Netzwerkzugangssystem hat als primäre Aufgabe, eine Verbindung zu einem kundenseitigen Netzwerkzugangssystem zu ermöglichen. Typischerweise ist das providerseitige Netzwerkzugangssystem ein Gerät, welches über Schicht 2 des OSI-Modells direkt mit dem kundenseitigen Netzwerkzugangssystem verbindbar ist. Ein solches Beispiel ist in der Patentschrift US-B1-7043541 gegeben. Das providerseitige Netzwerkzugangssystem kann beispielsweise ein Netzwerkknoten (insbesondere ein Schicht 2 Netzwerkknoten), ein Broadband Network Gateway (BNG), ein IP Edge Router, ein Broadband Remote Access Server (BRAS), ein Multiplexer, insbesondere ein Digital Subscriber Line Access Multiplexer (DSLAM) oder eine Kombination davon sein. Das providerseitige Netzwerkzugangssystem ist normalerweise in den Räumlichkeiten eines Netzwerkbetreibers untergebracht.

Das kundenseitige Netzwerkzugangssystem hat als primäre Aufgabe, eine Verbindung zu einem providerseitigen Netzwerkzugangssystem zu ermöglichen. Es ist normalerweise bei einem Kunden untergebracht und meist auch in dessen Besitz. Es dient primär dazu, elektronische Geräte oder elektronische Baugruppen des Kunden an das Zugangsnetzwerk des Providers anzuschliessen. Unter den Begriff "kundenseitiges Netzwerkzugangssystem" fallen daher insbesondere die Begriffe "Netzwerkterminierungsgerät", "Modem", "Switch", "Bridge" und "Router".

Aufgaben, die durch die Überwachung des Providers zu lösen sind, sind beispielsweise das Feststellen, ob die Verbindung funktioniert sowie bei Reklamationen des Kunden bestimmte Fehlerfälle festzustellen, auszuschliessen oder dagegen präventiv zu agieren. Dies wird beispielsweise in der Patentanmeldung US-A1-2004/0109688 gezeigt. In manchen Breitbandzugangsnetzen wird Asynchronous Transfer Mode (ATM) als Schicht 2 Protokoll eingesetzt, um eine Ende-zu-Ende-Verbindung von dem BNG zum Netzwerkterminierungsgerät herzustellen. Um die geforderte Überwachung zu ermöglichen unterstützt ATM entsprechende Operation-, Administration- und Maintenance-(OAM) Funktionen die eine Überwachung der Ende-zu-Ende-Verbindung ermöglichen. OAM-Funktionen für ATM (ATM OAM) sind beispielsweise in dem ITU-T Standard I.610 offenbart.

Traditionellerweise wird ATM als Schicht 2 Protokoll verwendet, wobei Ethernet dann über ATM übertragen werden kann. Damit ist gemeint, dass Ethernetrahmen beim Sender segmentiert, in ATM-Zellen verpackt und übertragen werden und beim Empfänger aus den ATM-Zellen ausgepackt und wieder zu Ethernetrahmen zusammengesetzt werden. In modernen Breitbandnetzen wird jedoch in zunehmendem Masse ATM durch Ethernet ersetzt, bzw. werden neue auf Ethernet basierende Breitbandzugangsnetze installiert. Ethernet wird dann direkt über der Schicht 1 übertragen. Damit ist gemeint, dass Ethernetrahmen unmittelbar mittels der Technologie der Bitübertragungsschicht (z.B. DSL) übertragen werden. Es findet keine zusätzliche Kapselung in ATM-Zellen statt. Für den Fall, dass auf Schicht 2 Ethernet eingesetzt wird, soll eine Ende-zu-Ende Überwachung der Verbindung weiterhin möglich sein. Dazu sind bereits OAM-Funktionen für Ethernet definiert worden, beispielsweise in dem ITU-T Standard Y.1731 und dem IEEE Draft Standard 802.1ag. Diese ermöglichen eine Ende-zu-Ende Überwachung auf dem Ethernet MAC Layer (Schicht 2). Der Begriff Ethernet OAM wird im Folgenden durch das Akronym ETHOAM abgekürzt.

Um standardisierte ETHOAM-Funktionen verwenden zu können, ist jedoch deren Implementierung im kundenseitigen Netzwerkzugangssystem und im providerseitigen Netzwerkzugangssystem notwendig. Während der Netzwerkbetreiber die volle Kontrolle über das providerseitige Netzwerkzugangssystem hat und dieses entsprechend mit OAM-Funktionen ausstatten kann, ist das kundenseitige Netzwerkzugangssystem normalerweise im Besitz des Kunden und kann daher nicht ohne weiteres ausgetauscht und/oder für ETHOAM konfiguriert werden. Aus diesem Grund besteht das Bedürfnis, die Schnittstelle eines providerseitigen Netzwerkzugangssystems, an welche ein kundenseitiges Netzwerkzugangssystem angeschlossen wird, der Konfiguration des kundenseitigen Netzwerkzugangssystems anzupassen. Dazu muss das providerseitige Netzwerkzugangssystem Kenntnis über eine allfällige Unterstützung von ETHOAM durch das kundenseitige Netzwerkzugangssystem haben.

Aus dem Liaison Statement der ITU-T Q.5/13 an das DSL Forum vom 24. Februar 2006 "Reply Liaison Statement on ETHOAN functionality" ist ein Verfahren bekannt, bei welchem das providerseitige Netzwerkzugangssystem Kenntnis über die Unterstützung von ETHOAM durch das kundenseitige Netzwerkzugangssystem dadurch zu gewinnen versucht, dass es einen Multicast Ethernet Loopback Message (ETH-LBM)-Rahmen zum kundenseitigen Netzwerkzugangssystem schickt und die Antwort des kundenseitigen Netzwerkzugancssystems auswertet. Wenn das kundenseitige Netzwerkzugangssystem einen Ethernet Loopback Reply (ETH-LBR)-Rahmen zurückschickt, unterstützt es offensichtlich ETHOAM. Trifft innerhalb einer gewissen Zeit kein ETH-LBR-Rahmen ein, wird ETHOAM offensichtlich nicht unterstützt. Nachteilig an diesem Verfahren ist jedoch, dass der ETH-LBR-Rahmen auch von einem anderen, im Netz des Kunden liegenden Gerät stammen kann statt von dem möglicherweise ETHOAM nicht unterstützenden kundenseitigen Netzwerkzugangssystem. In diesem Fall würde das providerseitige Netzwerkzugangssystem eine irreführende Information erhalten und daraus eine falsche Schlussfolgerung ziehen. Ferner ist es möglich, dass die spezielle Schicht 2-Verbindung, die mit ETHOAM überwacht werden soll, fehlerhaft ist. Dann können auch möglicherweise der ETH-LBM- und/oder der ETH-LBR-Rahmen nicht über die Verbindung übertragen werden. Obwohl das kundenseitige Netzwerkzuaangssystem eventuell ETHOAN unterstützt, wird vom.providerseitigen Netzwerkzugangssystem fälschlicherweise angenommen, es unterstütze dies nicht.

Ein weiterer Nachteil ergibt sich dadurch, dass das providerseitige Netzwerkzugangssystem nicht weiss, mittels welcher anderen OAM Technologie die Verbindung zu dem kundenseitigen Netzwerkzugangssystem überwacht werden soll. Der vorliegenden Erfindung liegt die Aufgabe zugrunde, eine OAM-Einstellung einer providerseitigen Schnittstelle eines providerseitigen Netzwerkzugangssystems, an welche ein kundenseitiges Netzwerkzugangssystem angeschlossen wird, zu konfigurieren.

Diese Aufgabe wird durch die in den unabhängigen Ansprüchen angegebenen Merkmale gelöst. Vorteilhafte Ausgestaltungen der Erfindung sind in weiteren Ansprüchen angegeben.

Dabei wird providerseitig zunächst ein Anschliessen des kundenseitigen Netzwerkzugangssystems an die providerseitige Schnittstelle des providerseitigen Netzwerkzugangssystems festgestellt. Zudem wird providerseitig zumindest ein Teil eines durch das kundenseitige Netzwerkzugangssystem unterstützten Protokollstapels ermittelt. Daraufhin wird eine weitere Vorgehensweise in Abhängigkeit von dem festgestellten Protokollstapel oder Teil des Protokollstapels aus einer Pluralität von weiteren Vorgehensweisen ausgewählt. Die Pluralität der weiteren Vorgehensweisen umfasst eine erste Vorgehensweise. Gemäss der ersten Vorgehensweise wird zusätzlich festgestellt, ob das kundenseitige Netzwerkzugangssystem Ethernet OAM unterstützt, falls der durch das kundenseitige Netzwerkzugangssystem unterstützte Protokollstapel Ethernet über ATM umfasst. Die providerseitige Schnittstelle wird dann für Ethernet OAM konfiguriert, falls das kundenseitige Netzwerkzugangssystem Ethernet OAM unterstützt. Die providerseitige Schnittstelle wird jedoch für ATM OAM konfiguriert, falls das kundenseitige Netzwerkzugangssystem Ethernet OAM nicht unterstützt. Zusätzlich zur Lösung der Aufgabe ergibt sich als ein weiterer Vorteil der Umstand, dass keine separate Prüfung auf ATM OAM vorgenommen werden muss.

Weitere vorteilhafte Ausführungsformen sind den abhängigen Ansprüchen zu entnehmen.

Das providerseitige Feststellen eines Teils des durch das kundenseitige Netzwerkzugangssystem unterstützten Protokollstapels umfasst typischerweise Schicht 1 und Schicht 2 Protokolle.

Gemäss einer vorteilhaften Ausführungsform umfasst die Pluralität von weiteren Vorgehensweisen zusätzlich eine zweite Vorgehensweise. Gemäss der zweiten Vorgehensweise wird die providerseitigen Schnittstelle für ATM OAM konfiguriert, falls der durch das kundenseitige Netzwerkzugangssystem unterstützte Protokollstapel ATM über Schicht 1. umfasst und nicht Ethernet über ATM umfasst. Auf diese Weise können Testprozeduren zur Ermittlung der von dem kundenseitige Netzwerkzugangssystem unterstützten OAM Technologien eingespart werden.

Gemäss einer weiteren vorteilhaften Ausführungsform umfasst die Pluralität von weiteren Vorgehensweisen zusätzlich eine dritte Vorgehensweisen. Gemäss der dritten Vorgehensweise wird zusätzlich festgestellt, ob das kundenseitige Netzwerkzugangssystem Ethernet OAM unterstützt, falls der durch das kundenseitige Netzwerkzuganassystem unterstützte Protokollstapel Ethernet über Schicht 1 umfasst. Das providerseitige Netzwerkzugancssystem oder ein an das providerseitige Netzwerkzugangssystem angeschlossenes Netzwerkmanagementsystem konfiguriert die providerseitige Schnittstelle für Ethernet OAM, falls das kundenseitige Netzwerkzugangssystem Ethernet OAM unterstützt.

Gemäss der ersten Vorgehensweise und der dritten Vorgehensweise wird festgestellt, ob das kundenseitige Netzwerkzugangssystem Ethernet OAM unterstützt. In einer weiteren vorteilhaften Ausführungsform umfasst die erste und/oder die dritte Vorgehensweise das Verschicken einer Nachricht von dem providerseitigen Netzwerkzugangssystem zu dem kundenseitigen Netzwerkzugangssystem. Die Nachricht verwendet in einem Destination-NAC-Adressfeld eine Multicastadresse, die die Eigenschaft hat, dass ein an sie adressierter Rahmen von dem kundenseitigen Netzwerkzuganassystem nicht weitergeleitet wird. Die Nachricht löst zudem von dem kundenseitigen Netzwerkzugangssystem eine Antwort aus, welche aussagt, dass die Ethernet OAM Funktion durch das kundenseitige Netzwerkzugangssystem unterstützt wird, falls das kundenseitige Netzwerkzugangssystem Ethernet OAM unterstützt. Auf diese Weise kann verhindert werden, dass die Nachricht an weitere Geräte oder Systeme, welche an das kundenseitige Netzwerkzugangssystem angeschlossen sind, weitergeleitet wird und eine falsche Antwort von diesen ausgelöst und an das providerseitige Netzwerkzuaangssystem versendet wird.

Indem das providerseitige Netzwerkzuaangssystem mit einem Broadband Network Gateway BNG verbunden ist und diesem mitteilt, für welche OAM-Einstellung die providerseitige Schnittstelle konfiguriert worden ist, lässt sich eine Ende-zu-Ende ETE Überwachung von dem BNG bis zu dem kundenseitigen Netzwerkzugangssystem einrichten. Insbesondere können Überwachungsnachrichten zwischen dem BNG und dem kundenseitigen Netzwerkzugangssystem hin und her geschickt werden.

Die Erfindung wird nachfolgend anhand der Zeichnung beispielsweise näher erläutert. Dabei zeigen:
- Figur 1: ein Flussdiagramm eines Verfahrens gemäss einer Ausführungsform der Erfindung;
- Figur 2: ein Netzwerk N in einer weiteren Ausführungsform; und
- Figur 3: ein Netzwerk N in einer weiteren Ausführungsform.

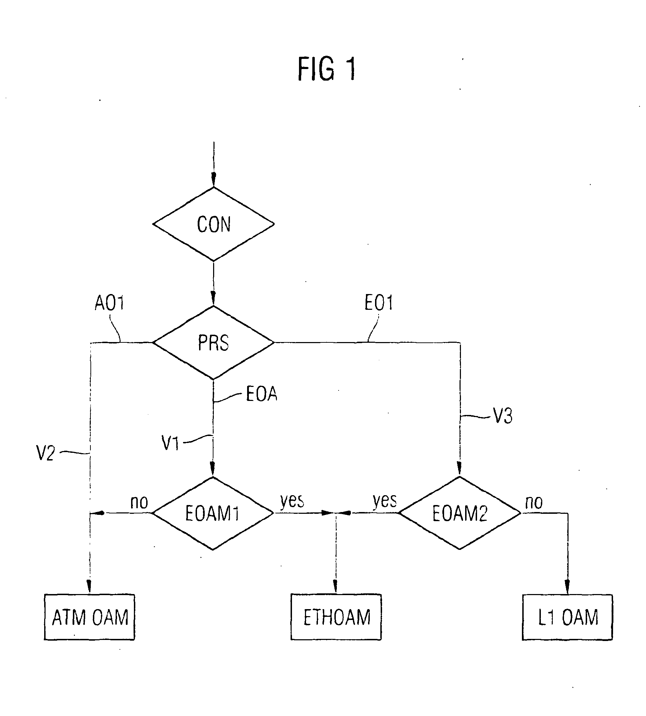

Figur 1 zeigt ein ein Flussdiagramm eines Verfahrens gemäss einer Ausführungsform der Erfindung. Dabei wird in einem ersten Verfahrensschritt CON durch das providerseitige Netzwerkzugangssystem PN zunächst festgestellt, dass das kundenseitige Netzwerkzugangssystem KN an die providerseitige Schnittstelle PS des providerseitigen Netzwerkzugangssystems PN angeschlossen worden ist. In dem weiteren Verfahrensschritt PRS wird zumindest ein Teil eines durch das kundenseitige Netzwerkzugangssystem KN unterstützten Protokollstapels festgestellt. Die Verfahrensschritte CON und PRS können auch in einem einzigen Verfahrensschritt ausgeführt werden, da anhand einer Information über den Protokollstapel von dem kundenseitigen Netzwerkzugangssystem KN zu dem providerseitigen Netzwerkzugangssystem PN geschlossen werden kann, dass das kundenseitige Netzwerkzugangssystem mit dem providerseitigen Netzwerkzugangssystem verbunden ist.

In Abhängigkeit von dem festgestellten Protokollstapel oder von dem festgestellten Teil des Protokollstapels wird eine weitere Vorgehensweise aus einer Pluralität von weiteren Vorgehensweisen V1, V2, V3 ausgewählt:

Eine erste Vorgehensweise V1 wird ausgewählt, falls der durch das kundenseitige Netzwerkzuganassystem KN unterstützte Protokollstapel Ethernet über ATM, symbolisiert durch EOA, umfasst. Gemäss der ersten Vorgehensweise Vl wird zusätzlich zur Ermittlung des durch das kundenseitige Netzwerkzugangssystem KN unterstützten Protokollstapels oder Teils des Protokollstapels in dem Verfahrensschritt EOAM1 festgestellt, ob das kundenseitige Netzwerkzugangssystem ETHOAM unterstützt. Das providerseitige Netzwerkzugangssystem PN konfiguriert die providerseitige Schnittstelle PS für ETHOAM, falls das kundenseitige Netzwerkzugangssystem KN ETHOAM unterstützt (yes). Unterstützt das kundenseitige Netzwerkzugangssystem KN ETHOAM hingegen nicht (no), so wird die providerseitige Schnittstelle PS für ATM OAM konfiguriert, da davon ausgegangen werden kann, dass das kundenseitige Netzwerkzugangssystem in diesem Fall ATM OAM unterstützt.

Eine zweite Vorgehensweise V2 wird ausgewählt, falls der durch das kundenseitige Netzwerkzugangssystem KN unterstützte Protokollstapel ATM über Schicht 1 und nicht Ethernet über ATM, symbolisiert durch A01, umfasst. Gemäss der zweiten Vorgehensweise V2 wird die providerseitige Schnittstelle PS für ATM OAM konfiguriert, da davon ausgegangen werden kann, dass das kundenseitige Netzwerkzugangssystem in diesem Fall ATM OAM unterstützt.

Eine dritte Vorgehensweise V3 wird ausgewählt, falls der durch das kundenseitige Netzwerkzugangssystem KN unterstützte Protokollstapel Ethernet über Schicht 1, symbolisiert durch EO1, umfasst. Gemäss der dritten Vorgehensweise V3 wird zusätzlich zur Ermittlung des durch das kundenseitige Netzwerkzugangssystem KN unterstützten Protokollstapels oder Teils des Protokollstapels in dem Verfahrensschritt EOAM2 festgestellt, ob das kundenseitige Netzwerkzugangssystem KN ETHOAM unterstützt. Falls das kundenseitige Netzwerkzugangssystem ETHOAM unterstützt (yes), wird die providerseitige Schnittstelle für ETHOAM konfiguriert. Falls das kundenseitige Netzwerkzugangssystem ETHOAM nicht unterstützt (no), wird die providerseitige Schnittstelle für eine andere geeignete OAM-Technologie konfiguriert, beispielsweise für eine OAM Überwachung der Schicht 1 des OSI-Modells L1 OAM oder für EFM OAM.

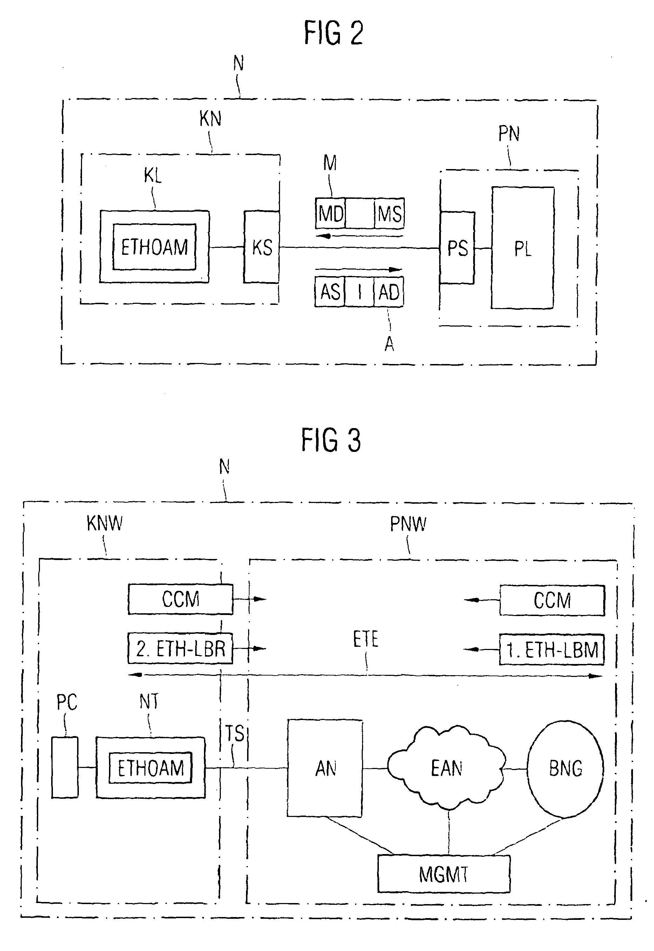

Figur 2 zeigt ein Netzwerk N, welches ein providerseitiges Netzwerkzugangssystem PN und ein kundenseitiges Netzwerkzugangssystem KN umfasst, in einer weiteren Ausführungsform. Das kundenseitige Netzwerkzugangssystem KN umfasst eine kundenseitige Logik KL und eine kundenseitige Schnittstelle KS. Die kundenseitige Logik KL verfügt über eine ETHOAM Funktion ETHOAM. Das providerseitige Netzwerkzugangssystem PN umfasst eine providerseitige Logik PL und eine providerseitige Schnittstelle PS. Die providerseitige Logik ist derart adaptiert, dass das Verfahren, welches in Figur 1 beschrieben ist, durch das providerseitige Netzwerkzugangssystem PN und/oder durch das Netzwerk N durchgeführt werden kann.

Um die in Figur 1 sowie in den Ansprüchen beschriebenen Vorgehensweisen V1 und V3 durchzuführen, wird eine Nachricht M in Form eines oder mehrerer Ethernet-Rahmen von dem providerseitigen Netzwerkzugangssystem PN zu dem kundenseitigen Netzwerkzugangssystem KN verschickt. Die Nachricht M verwendet in einem Destination-MAC-Adressfeld eine Multicastadresse MD, die die Eigenschaft hat, dass Rahmen, die an sie adressiert sind, von dem kundenseitigen Netzwerkzugangssystem KN nicht weitergeleitet werden. Aufgrund der Nachricht M erzeugt das kundenseitige Netzwerkzugangssystem KN eine Antwort A, welche eine Information über das kundenseitige Netzwerkzugangssystem KN umfasst und versendet diese an das providerseitige Netzwerkzugangssystem PN.

Vorzugsweise verwendet die Nachricht M in einem Source-MAC-Adressfeld MS die MAC-Adresse des providerseitigen Netzwerkzuaangssystems PN, welche von dem kundenseitigen Netzwerkzugangssystem in das Destination-MAC-Adressfeld AD der Antwort A eingesetzt wird. Das Source-MAC-Adressfeld AS der Antwort umfasst vorzugsweise die MAC-Adresse des kundenseitigen Netzwerkzugangssystems KN.

Die Antwort A umfasst die Information 1, dass das kundenseitige Netzwerkzugangssystem KN eine ETHOAM Funktion implementiert hat. Auf diese Weise kann nach dem Anschliessen des kundenseitigen Netzwerkzugangssystems KN an das providerseitige Netzwerkzugangssystem PN das providerseitige Netzwerkzugangssystem PN und/oder ein Netzwerk Management System informiert werden, dass es diejenige providerseitige Schnittstelle PS, an welche das kundenseitige Netzwerkzugangssystem KN angeschlossen worden ist, für die ETHOAM konfigurieren soll.

Figur 3 zeigt eine Ausführungsform eines Netzwerkes N, welches ein Kundennetzwerk KNW und ein Providernetzwerk PNW umfasst. Das Providernetzwerk PNW umfasst einen Broadband Network Gateway BNG und einen Access Node AN, der beispielsweise als ein DSL-Zugangsmultiplexer (DSLAM) ausgeführt sein kann. In dieser Ausführungsform nimmt der Access Node AN die Funktion des providerseitigen Netzwerkzugangssystems PN ein und umfasst dieselben Elemente wie das in Figur 2 beschriebene providerseitige Netzwerkzugangssystern PN. Der Broadband Network Gateway BNG und der Access Node AN sind über ein Ethernet Agaregationsnetz EAN miteinander verbunden. Das Proviäernetzwerk PNW kann weitere Netzelemente enthalten, welche beispielsweise von dem Ethernet Aggregationsnetz EAN umfasst werden.

Das Providernetzwerk PNW umfasst zudem ein Netzwerk Management System MGMT. Der Netzbetreiber kann das Providernetzwerk PNW mit dem Netzwerk Management System MGMT steuern. Er kann zum Beispiel an den Netzelementen im Providernetzwerk, zum Beispiel am Access Node AN oder dem Broadband Network Gateway BNG, über das Netzwerk Management System MGMT Einstellungen vornehmen oder auslesen.

Das Kundennetzwerk KNW umfasst ein kundenseitiges Netzwerkzugangssystem KN, welches als Netzwerkterminierungsaerät NT ausgeführt ist und ETHOAM implementiert hat. Das Kundennetzwerk KNW kann weitere Geräte enthalten, die mit dem Netzwerkterminierungsgerät NT verbunden sind und hier durch ein Endgerät, zum Beispiel einen Personal Computer PC, symbolisiert sind. Der Netzabschnitt von dem Access Node AN bis zu dem Netzwerkterminierungsgerät NT wird im folgenden als Teilnehmerschnittstelle TS bezeichnet.

Das Providernetzwerk PNW verwendet Ethernet als Schicht 2 Technologie. Es kann deshalb mittels ETHOAM Funktionen überwacht werden. Damit ist beispielsweise gemeint, dass der BNG in regelmässigen Abständen Überwachungsnachrichten CCM in Form von Ethernet-Rahmen an den Access Node AN sendet. Aus dem Eintreffen einer Überwachunasnachricht CCM kann der Access Node AN schliessen, dass die Datenübertragung vom Broadband Network Gateway BNG zum Access Node AN funktioniert. Die Überwachungsnachrichten werden vorteilhafterweise innerhalb derselben logischen Ethernet-Kanäle übertragen, in denen auch sonstige Daten übertragen werden. Damit ist sichergestellt, dass die Überwachungsnachrichten den selben möglichen Fehlerbedingungen unterliegen wie die sonstigen Daten. Wenn beispielsweise eine Datenübertragung durch einen Fehler unterbrochen wird, so wird auch die Übertragung der Überwachungsnachrichten unterbrochen.

Die Überwachungsnachrichten CCM können auch in der Gegenrichtung, vom Access Node AN zum Broadband Network Gateway BNG, übertragen werden. Damit wird beispielsweise die Funktion der Datenübertragung vom AN zum BNG überprüft. Es ist auch möglich, nur einzelne Teilstrecken derartig zu überwachen, beispielsweise die Strecke vom Broadband Network Gateway BNG zu einem im Ethernet Agareaationsnetz EAN liegenden Netzelement.

lm Folgenden wird davon ausgegangen, dass die providerseitige Schnittstelle PS gemäss dem in Figur 1 beschriebenen Verfahren für ETHOAM konfiguriert worden ist. Durch die Erkennunasprozedur erfuhr der Access Node AN auch die MAC-Adresse des Netzwerkterminierungsgerätes NT. Anschliessend übermittelt der Access Node AN die vorher vom Netzwerkterminierungsgerät NT empfangene Information 1, dass das Netzwerkterminierungsgerät NT eine ETHOAM Funktion unterstützt sowie eine Information, mit der die providerseitige Schnittstelle PS vom Broadband Network Gateway BNG eindeutig identifiziert werden kann, an das Netzwerk Management System MGMT. Eine solche Information zur Identifikation der providerseitigen Schnittstelle stellt beispielsweise die MAC-Adresse des Netzwerkterminierungsgerätes oder die Circuit ID aus DHCP Option 82 (IETF-Standard RFC 3046) dar. Alternativ kann die Information auch an den Broadband Network Gateway BNG übermittelt werden. Dies hat den Vorteil, dass das Broadband Network Gateway BNG die Information direkt zur Verfügung hat und diese nicht erst vom Management MGMT anfordern muss, wenn eine Überwachung gestartet werden soll.
Die Verwendung der Circuit ID aus DHCP Option 82 (IETF-Standard RFC 3046) ist vor allem dann nützlich, wenn das Netzwerkterminierungsgerät NT keine eigene MAC-Adresse besitzt. Dies kann beispielsweise dann der Fall sein, wenn, anders als in Figur 3 gezeichnet, als Schicht 2 Protokoll ATM verwendet wird.

Die Verwendung einer Information, mit der die providerseitige Schnittstelle PS des Access Node AN eindeutig identifiziert werden kann, ist notwendig, wenn ab dem Broadband Network Gateway BNG, zum Beispiel initiiert vom Management MGMT, eine Überwachung eines Netzabschnitts vom Broadband Network Gateway BNG bis zum Netzwerkterminierungsgerät NT gestartet werden soll. Für die Überwachung muss das Broadband Network Gateway BNG Überwachungsnachrichten an das Netzwerkterminierungsgerät NT schicken. Hierzu muss der BNG zunächst die providerseitige Schnittstelle PS eindeutig identifizieren.
Aus der Information, dass das Netzwerkterminierungsgerät NT ETHOAM Funktionen unterstützt, kann der Netzbetreiber schliessen, dass die logischen Verbindungen innerhalb der Schicht 2 bis zum Netzwerkterminierungsgerät NT überwacht werden können. Das bedeutet eine hohe Qualität und Aussagekraft der Überwachung, da eine Ende-zu-Ende-Überwachung ETE von dem BNG zum NT ermöglicht wird.

In dem hier nicht gezeichneten Fall, dass das Netzwerkterminierungsgerät NT ETHOAM nicht unterstützt, wird dies von der unter Figur 1 beschriebenen Erkennungsprozedur erkannt. In diesem Fall kann das Providernetzwerk PNW mittels ETHOAN Funktionen und die Teilnehmerschnittstelle mittels Überwachungsverfahren der Schicht 1 überwacht werden. Der Access Node AN setzt in diesem Fall zum Beispiel Überwachungsnachrichten der ETHOAM Funktionen in entsprechende Aktionen zur Überwachung der Schicht 1 um. Ein Ergebnis der Überwachung der Schicht 1 wird vom Access Node AN wiederum umgesetzt in eine entsprechende Überwachungsnachricht einer ETHOAM Funktion. Wird die Teilnehmerschnittstelle anstelle von mittels ETHOAM nur mittels Schicht 1 Überwachungsfunktionen überwacht, so können beispielsweise die logischen Verbindungen auf Schicht 2 nicht überprüft werden. Es ist nützlich für den Netzbetreiber, die Art der Überwachung der Teilnehmerschnittstelle TS zu kennen, d.h. ob diese beispielsweise mittels ETHOAM oder mittels anderer Funktionen überwacht wird. Durch diese Kenntnis weiß der Netzbetreiber, wie das Überwachungsergebnis zu interpretieren ist. Aus diesem Grund liefert der Access Node AN nach Abschluß der Erkennungsprozedur der unterstützten Überwachungsfunktionen im Netzwerkterminierungsgerät NT eine Information über die unterstützten Überwachungsfunktionen beispielsweise an das Management MGMT.

In dem in Figur 3 ebenso nicht dargestellten Fall, dass auf der Teilnehmerschnittstelle als Schicht 2 Protokoll ATM verwendet, wird, ist diese Information über das unterstützte Überwachungsverfahren ebenso nützlich, weil ATM OAM Funktionen zwar logische Verbindungen innerhalb von ATM überwachen können, jedoch mittels einer logischen Verbindung von ATM mehrere logische Verbindungen von Ethernet übertragen werden können.

### Liste der verwendeten Bezugszeichen

- A: Antwort
- AD: Destination-MAC-Adressfeld der Antwort
- AN: Access Node
- AO1: ATM über Schicht 1
- AS: Source-MAC-Adressfeld der Antwort
- BNG: Broadband Network Gateway
- CON: Verfahrensschritt Feststellen des Anschliessens des kundenseitige Netzwerkzugangssystems
- DSLAN: DSL-Zugangsmultiplexer
- EAN: Ethernet Aggregationsnetz
- EO1: Ethernet über Schicht 1
- EOA: Ethernet über ATM
- EOAM1: Verfahrensschritt zum Feststellen ob das kundenseitige Netzwerkzuganassystem ETHOAM unterstützt
- EOAM2: Verfahrensschritt zum Feststellen ob das kundenseitige Netzwerkzugangssystem ETHOAM unterstützt
- ETH-LBM: Ethernet-Loopback-Message-Rahmen
- ETH-LBR: Ethernet-Loopback-Reply-Rahmen
- ETHOAN: Ethernet OAM Funktion
- KL: kundenseitige Logik
- KN: kundenseitiges Netzwerkzugangssystem
- KNW: Kundennetzwerk
- KS: kundenseitige Schnittstelle
- L1 OAM: OAM Überwachung der Schicht 1
- M: Nachricht
- MD: Destination-MAC-Adressfeld der Nachricht
- MGMT: Netzwerk Management System
- MS: Source-MAC-Adressfeld der Nachricht
- N: Netzwerk
- NT: Netzwerkterminierungsgerät
- PL: Providerseitige Logik
- PN: providerseitiges Netzwerkzugangssystem
- PNW: Providernetzwerk
- PRS: Verfahrensschritt Feststellen des Protokollstapels
- PRS: providerseitige Schnittstelle
- TS: Teilnehmerschnittstelle
- V1: erste Vorgehensweise
- V2: zweite Vorgehensweise
- V3: dritte Vorgehensweise

## Patentansprüche

1. Verfahren zum Konfigurieren einer OAM-Einstellung (ETHOAM, ATM OAM, L1 OAM) einer providerseitigen Schnittstelle (PS) eines providerseitigen Netzwerkzugangssystems (PN, AN), an welche ein kundenseitiges Netzwerkzugangssystem (KN, NT) angeschlossen wird, umfassend den Verfahrensschritt:
a) providerseitiges Feststellen eines Anschliessens des kundenseitigen Netzwerkzuganassystems (KN, NT) an die providerseitige Schnittstelle (PS) des providerseitigen Netzwerkzugangssystems (PN, AN); **gekennzeichnet durch** die weiteren Verfahrensschritte:
b) providerseitiges Feststellen zumindest eines Teils eines durch das kundenseitige Netzwerkzugangssystems (KN, NT) unterstützten Protokollstapels (EO1, EOA, AO1),
c) Auswählen einer weiteren Vorgehensweise aus einer Pluralität von weiteren Vorgehensweisen (V1, V2, V3), wobei die weitere Vorgehensweise (V1, V2, V3) in Abhängigkeit von dem festgestellten Protokollstapel oder Teil des Protokollstapels (EO1, EOA, AO1) ausgewählt wird, und wobei die Pluralität der weiteren Vorgehensweisen eine erste Vorgehensweise (V1) umfasst, gemäss welcher zusätzlich festgestellt wird, ob das kundenseitige Netzwerkzugangssystem (KN, NT) Ethernet OAM (ETHOAM) unterstützt, falls der **durch** das kundenseitige Netzwerkzugangssystem (KN, NT) unterstützte Protokollstapel Ethernet über ATM (EOA) umfasst, wobei die providerseitige Schnittstelle (PS) dann für Ethernet OAM (ETHOAM) konfiguriert wird, falls das kundenseitige Netzwerkzugangssystem (KN) Ethernet OAM (ETHOA-M) unterstützt, die providerseitige Schnittstelle (PS) jedoch für ATM OAM konfiguriert wird, falls das kunäenseitige Netzwerkzugangssystem (KN, NT) Ethernet OAM (ETHOAM) nicht unterstützt.

2. Verfahren nach Anspruch 1,
**dadurch gekennzeichnet, dass**
die Pluralität von weiteren Vorgehensweisen (V1, V2, V3) zusätzlich eine zweite Vorgehensweise (V2) umfasst, gemäss welcher die providerseitige Schnittstelle (PS) für ATM OAM konfiguriert wird, falls der durch das kundenseitige Netzwerkzugangssystem (KN, NT) unterstützte Protokollstapel ATM über Schicht 2 (AO1) umfasst.

3. Verfahren nach Anspruch 1 oder 2,
**dadurch gekennzeichnet, dass**
die Pluralität von weiteren Vorgehensweisen (V1, V2, V3) zusätzlich eine dritte Vorgehensweise (V3) umfasst, gemäss welcher zusätzlich festgestellt wird, ob das kundenseitige Netzwerkzugangssystem (KN, NT) Ethernet OAM (ETHOAM) unterstützt, falls der durch das kundenseitige Netzwerkzugangssystem (KN, NT) unterstützte Protokollstapel Ethernet über Schicht 1 (EO1) umfasst, wobei die providerseitige Schnittstelle für Ethernet OAM (ETHOAM) konfiguriert wird, falls das kundenseitige Netzwerkzuaangssystem (KN, NT) Ethernet OAM (ETHOAM) unterstützt.

4. Verfahren nach einem der vorhergehenden Ansprüche,
**dadurch gekennzeichnet, dass**
gemäss der ersten Vorgehensweise (V1) und/oder der dritten Vorgehensweise (V3) das zusätzliche Feststellen, ob das kundenseitige Netzwerkzuaangssystem Ethernet OAM unterstützt, das Verschicken einer Nachricht (M) von dem providerseitigen Netzwerkzugangssystem (PN, AN) zu dem kundenseitigen Netzwerkzugangssystem (KN, NT) umfasst, wobei die Nachricht (M) in einem Destination-MAC-Adressfeld (MD) eine Multicastadresse verwendet, die die Eigenschaft hat, dass ein an sie adressierter Rahmen von dem kundenseitigen Netzwerkzugangssystem (KN, NT) nicht weitergeleitet wird, und durch die Nachricht von dem kundenseitigen Netzwerkzugangssystem (KN, NT) eine Antwort (A) ausgelöst wird, welche aussagt, dass die Ethernet OAN Funktion (ETH OAM) durch das kundenseitige Netzwerkzugangssystem (KN, NT) unterstützt wird, falls das kundenseitige Netzwerkzugangssystem (KN, NT) Ethernet OAM unterstützt.

5. Verfahren nach einem der vorhergehenden Ansprüche,
**dadurch** gekenntzeichnet, dass
das providerseitige Netzwerkzugangssystem (PN) durch ein Netzwerk Management System (MGMT) administriert wird und das providerseitige Netzwerkzugangssystem (PN) dem Netzwerk Management System (MGMT) die OAM-Einstellung (ATM OAM, ETHOAM, L1 OAM) mitteilt, für welche die providerseitige Schnittstelle (PS) konfiguriert worden ist.

6. Verfahren nach einem der vorhergehenden Ansprüche,
**dadurch gekennzeichnet, dass**
das providerseitige Netzwerkzugangssystem (PN) mit einem Broadband Network Gateway (BNG) verbunden ist und diesem mitteilt, für welche OAM-Einstelluna (ATM OAM, ETHOAM, L1 OAM) die providerseitige Schnittstelle (PS) konfiguriert worden ist.

7. Providerseitiges Netzwerkzuaanassystem (PN, AN) mit einer providerseitigen Schnittstelle an welche ein kundenseitiges Netzwerkzugangssystem (KN, NT) anschließbar ist, wobei das System jeweils Mittel zur Durchführung der Verfahrensschritte nach einem der Ansprüche 1-6 aufweist.

8. Netzwerk (N) umfassend das providerseitige Netzwerkzugangssystem (PN, AN) gemäß Anspruch 7 und ein kundenseitiges Netzwerkzugangssystem (KN, NT).

## Claims

1. Method for configuring an OAM setting (ETHOAM, ATM OAM, L1 OAM) for a provider interface (PS) in a provider network access system (PN, AN) to which a customer network access system (KN, NT) is connected, comprising the following method step:
a) the provider ascertains connection of the customer network access system (KN, NT) to the provider interface (PS) in the provider network access system (PN, AN); **characterized by** the following further method steps:
b) the provider ascertains at least one portion of a protocol stack (EO1, EOA, AO1) supported by the customer network access system (KN, NT),
c) a further course of action is selected from a plurality of further courses of action (V1, V2, V3), wherein the further course of action (V1, V2, V3) is selected on the basis of the ascertained protocol stack or portion of the protocol stack (EO1, EOA, AO1), and wherein the plurality of further courses of action comprises a first course of action (V1), according to which it is additionally ascertained whether the customer network access system (KN, NT) supports Ethernet OAM (ETHOAM) if the protocol stack supported by the customer network access system (KN, NT) comprises Ethernet over ATM (EOA), wherein the provider interface (PS) is then configured for Ethernet OAM (ETHOAM) if the customer network access system (KN) supports Ethernet OAM (ETHOAM), but the provider interface (PS) is configured for ATM OAM if the customer network access system (KN, NT) does not support Ethernet OAM (ETHOAM).

2. Method according to Claim 1,
**characterized in that**
the plurality of further courses of action (V1, V2, V3) additionally comprises a second course of action (V2), according to which the provider interface (PS) is configured for ATM OAM if the protocol stack supported by the customer network access system (KN, NT) comprises ATM over Layer 1 (AO1).

3. Method according to Claim 1 or 2,
**characterized in that**
the plurality of further courses of action (V1, V2, V3) additionally comprises a third course of action (V3), according to which it is additionally ascertained whether the customer network access system (KN, NT) supports Ethernet OAM (ETHOAM) if the protocol stack supported by the customer network access system (KN, NT) comprises Ethernet over Layer 1 (EO1), wherein the provider interface is configured for Ethernet OAM (ETHOAM) if the customer network access system (KN, NT) supports Ethernet OAM (ETHOAM).

4. Method according to one of the preceding claims,
**characterized in that**
according to the first course of action (V1) and/or the third course of action (V3) the additional ascertainment of whether the customer network access system supports Ethernet OAM comprises the sending of a message (M) from the provider network access system (PN, AN) to the customer network access system (KN, NT), wherein the message (M) uses a multicast address in a destination MAC address field (MD), said multicast address having the property that a frame addressed thereto is not forwarded by the customer network access system (KN, NT), and the message prompts the customer network access system (KN, NT) to initiate a response (A) which states that the Ethernet OAM function (ETH OAM) is supported by the customer network access system (KN, NT) if the customer network access system (KN, NT) supports Ethernet OAM.

5. Method according to one of the preceding claims,
**characterized in that**
the provider network access system (PN) is administrated by a network management system (MGMT), and the provider network access system (PN) notifies the network management system (MGMT) of the OAM setting (ATM OAM, ETHOAM, L1 OAM) for which the provider interface (PS) has been configured.

6. Method according to one of the preceding claims,
**characterized in that**
the provider network access system (PN) is connected to a broadband network gateway (BNG) and notifies the latter of that OAM setting (ATM OAM, ETHOAM, L1 OAM) for which the provider interface (PS) has been configured.

7. Provider network access system (PN, AN) having a provider interface to which a customer network access system (KN, NT) can be connected, wherein the system respectively has means for carrying out the method steps according to one of Claims 1-6.

8. Network (N) comprising the provider network access system (PN, AN) according to Claim 7 and a customer network access system (KN, NT).

## Revendications

1. Procédé pour configurer un réglage OAM (ETHOAM, ATM-OAM, L1 OAM) d'une interface (PS) côté fournisseur d'un système d'accès au réseau (PN, AN) côté fournisseur, auquel est connecté un système d'accès au réseau côté client (KN, NT), comprenant l'étape de procédé:
a) constater du côté fournisseur la connexion d'un système d'accès au réseau côté client (KN, NT) à l'interface côté fournisseur (PS) du système d'accès au réseau côté fournisseur (PN, AN); **caractérisé par** les étapes de procédé supplémentaires :
b) constater du côté fournisseur au moins une partie d'une pile de protocoles (EO1, EOA, AO1) soutenue par le système d'accès au réseau côté client (KN, NT),
c) choisir une procédure supplémentaire parmi une pluralité de procédures supplémentaires (V1, V2, V3), la procédure supplémentaire (V1, V2, V3) étant choisie en fonction de la pile de protocoles ou partie de pile de protocoles (EO1, EOA, A01), constatée, et la pluralité des procédures supplémentaires comprenant une première procédure (V1), selon laquelle on constate en outre si le système d'accès au réseau côté client (KN, NT) soutient Ethernet OAM (ETHOAM), dans le cas où la pile de protocoles soutenue par le système d'accès au réseau côté client (KN, NT) comprend Ethernet via ATM (EOA), l'interface du côté fournisseur (PS) étant alors configurée pour Ethernet OAM (ETHOAM), dans le cas où le système d'accès au réseau côté client (KN) soutient Ethernet OAM (ETHOAM), l'interface du côté fournisseur (PS) est toutefois configuré pour ATM OAM, dans le cas où le système d'accès au réseau côté client (KN, NT) ne soutient pas Ethernet OAM (ETHOAM).

2. Procédé selon la revendication 1, **caractérisé en ce que** la pluralité des procédures supplémentaires (V1, V2, V3) comprend en outre une deuxième procédure (V2), selon laquelle l'interface du côté fournisseur (PS) est configurée pour ATM OAM, dans le cas où la pile de protocoles soutenue par le système d'accès au réseau côté client (KN, NT) comprend ATM via la couche 1 (AO1).

3. Procédé selon la revendication 1 ou 2, **caractérisé en ce que** la pluralité des procédures supplémentaires (V1, V2, V3) comprend en outre une troisième procédure (V3) selon laquelle on constate en outre si le système d'accès au réseau côté client (KN, NT) soutient Ethernet OAM (ETHOAM), dans le cas où la pile de protocoles soutenue par le système d'accès au réseau côté client (KN, NT) comprend Ethernet via la couche 1 (EOA), l'interface du côté fournisseur étant configuré pour Ethernet OAM (ETHOAM) dans le cas où le système d'accès au réseau côté client (KN, NT) soutient Ethernet OAM (ETHOAM).

4. Procédé selon l'une quelconque des revendications précédentes, **caractérisé en ce que** selon la première procédure (V1) et/ou la troisième procédure (V3), la constatation supplémentaire de si le système d'accès au réseau du côté client soutient Ethernet OAM, comprend l'envoi d'un message (M) à partir du système d'accès au réseau côté fournisseur (PN, AN) vers le système d'accès au réseau côté client (KN,NT), le message (M) emploie une adresse de groupe ("multicast") dans un champ d'adresse de destination MAC (MD), qui présente la propriété qu'une trame qui lui est adressée à partir du système d'accès au réseau côté client (KN, NT) n'est pas transféré, et une réponse (A) est déclenchée par le message provenant du système d'accès au réseau côté client (KN, NT), réponse qui exprime que la fonction Ethernet OAM (ETHOAM) est soutenue par le système d'accès au réseau côté client (KN, NT), dans le cas où le système d'accès au réseau côté client (KN, NT) soutient Ethernet OAM.

5. Procédé selon l'une quelconque des revendications précédentes, **caractérisé en ce que** le système d'accès au réseau côté fournisseur (PN) est administré par un système de gestion de réseau (MGMT) et le système d'accès au réseau côté fournisseur (PN) communique le réglage OAM (ATM OAM, ETHOAM, L1 OAM) au système de gestion de réseau (MGMT), réglage pour lequel l'interface du côté fournisseur (PS) a été configurée.

6. Procédé selon l'une quelconque des revendications précédentes, **caractérisé en ce que** le système d'accès au réseau côté fournisseur (PN) est connecté à une passerelle de réseau à large bande (BNG) et communique à celle-ci, le réglage OAM (ATM, OAM, ETHOAM, L1 OAM) pour lequel l'interface du côté fournisseur (PS) a été configuré.

7. Système d'accès au réseau côté fournisseur (PN, AN) ayant une interface du côté fournisseur sur laquelle un système d'accès au réseau côté client (KN, NT) peut être connecté, le système présentant respectivement des moyens pour réaliser l'étape de procédé selon l'une quelconque des revendications 1 à 6.

8. Réseau (N) comprenant le système d'accès au réseau côté fournisseur (PN, AN) selon la revendication 7 et un système d'accès au réseau côté client (KN, NT).
